(19) Europäisches Patentamt
European Patent Office
Office européen des brevets

(11) **EP 3 349 421 A1**

(12) **EUROPEAN PATENT APPLICATION**

(43) Date of publication:
**18.07.2018 Bulletin 2018/29**

(51) Int Cl.:
***H04L 29/12*** (2006.01)   ***H04L 12/24*** (2006.01)
***H04L 29/08*** (2006.01)

(21) Application number: **17151038.1**

(22) Date of filing: **11.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Akjumen ApS**
**5700 Svendborg (DK)**

(72) Inventor: **Figueiras, João Carlos Prazeres**
**2500 Valby (DK)**

(74) Representative: **Aera A/S**
**Gammel Kongevej 60, 18th floor**
**1850 Frederiksberg C (DK)**

(54) **METHODS FOR MANAGING A SET OF NETWORK RESOURCE SERVERS AND RELATED DEVICES**

(57)    This disclosure provides a method for managing/monitoring a set of network resource servers of a system. The method is performed at a resource management server device. The system comprising a requester device, the resource management server device, and a plurality of network resource servers. The method comprises receiving a resource access request from the requester device. The method comprises deriving a reliability, availability and maintainability, RAM, criterion. Deriving the RAM criterion comprises analysing a characteristic of one or more previous resource access requests targeting a resource representation related to one or more of network resource servers. The one or more previous resource access requests are received at the resource management server device. The method may comprise determining a performance metric for each of the network resource servers in the set based on the one or more previous resource access requests targeting the resource representation related to each of the network resource servers. The method comprises selecting, amongst the set of network resource servers, one or more network resource servers which have the performance metric satisfying the RAM criterion. The method comprises obtaining a resource identifier for each of the selected one or more network resource servers; and transmitting a resource access response to the requester device, wherein the resource access response comprises the obtained resource identifier.

Fig. 1

**Description**

FIELD OF THE INVENTION

The present invention pertains to field of networking, in particular to the field of network resource management. The present disclosure relates to methods for managing a set of network resource servers of a system and related resource management server devices.

BACKGROUND OF THE INVENTION

In communications networks, e.g. Internet, private fixed networks, cellular networks, short-range communications, network resource management is widely applied to relate to objects distributed across the network. For example, a domain name, represented by a text string, aims at supporting humans to trivially recognize the related objects and easily interact with the network resources to which the objects belong. A single domain name can either relate to a single object or a set of objects. For the latter, the objects share a logical structure to be used by the overlaying application. The objects identify network resources that are distributed across the network and are placed in target servers which make those network resources available. Although domain names target human readability, domain names are also intrinsically used in direct communications among machines without direct human interaction.

When several objects are related to a network resource, the objects can be typically used with no particular priority for the sake of providing the overlaying communication. This is often used to distribute similar network resources across different servers, either to avoid network resource exhaustion or to ensure redundancy of the services in case any component fails in the system or is brought down intentionally e.g. for maintenance purposes. Prioritizing the objects to be used commonly aims at building load-balancing solutions.

Load-balancing solutions can in addition help manage network resources, either by the mere fact that multiple servers exist and the failing of some of the network resources do not cause a complete blackout, or by adding additional health-check protocols that can assess the status of the network resources by actively querying the objects.

Health-check features can be either implemented at the network level exclusively, by having a server actively querying the network resource server to assess their health status, or at the application level implemented by application dependent and dedicated mechanisms that aim at evaluating the health condition of a single of a set of features of the application.

For certain types of network resource servers, such as highly secure servers or servers related to safety of people, the health-check features are often disabled as a way to reduce cyber-security threats, such as attacks that simply collect information about responsive servers connected to the network to exploit any open/available resource.

There is a need for an improved solution to managing network resources.

SUMMARY OF THE INVENTION

It is an object of the present disclosure to provide methods and resource management server device that attempt to alleviate, and/or mitigate the problems or disadvantages in the prior-art.

This object is obtained by a method for managing/monitoring a set of network resource servers of a system. The method is performed at a resource management server device. The system comprising a requester device, the resource management server device, and a plurality of network resource servers. The method comprises receiving a resource access request from the requester device. The method comprises deriving a reliability, availability and maintainability (RAM) criterion. Deriving the RAM criterion comprises analysing a characteristic of one or more previous resource access requests targeting a resource representation related to one or more of network resource servers. The one or more previous resource access requests are received at the resource management server device. The method may comprise determining a performance metric for each of the network resource servers in the set based on the one or more previous resource access requests targeting a resource representation related to each of the network resource servers. The method comprises selecting, amongst the set of network resource servers, one or more network resource servers which have the performance metric satisfying the RAM criterion. The method comprises obtaining a resource identifier for each of the selected one or more network resource servers; and transmitting a resource access response to the requester device, wherein the resource access response comprises the obtained resource identifier.

The present disclosure advantageously provides a resource management server device that is able to passively analyze information about resource access requests and requester devices in order to select a subset of the network resource servers that lead to a higher (or highest possible) successful communication rate between all the requester devices and the network resource server identified in the request access response. The disclosed method aims primarily at maximizing reliability, availability, and maintainability of the overlaying applications by passively analyzing resource access requests without the need of health check mechanisms, i.e. without interaction with the network resource servers.

This provides the advantage of being less intrusive and therefore suitable for critical infrastructures, such as secure network resource services in dedicated communication systems for transportation, medical, or energy infrastructures.

There is also disclosed herein a resource management server device comprising an interface module; a processing module; and a memory module. The resource management server device is configured to perform the method disclosed herein.

This disclosure also relates to a non-transitory computer readable storage medium comprising a computer program, comprising computer readable code which, when run on a processing module of an apparatus, causes the apparatus to perform any of the methods steps disclosed herein.

The computer programs, the resource management server devices provide advantages corresponding to the advantages already described in relation to the methods.

BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.

Fig. 1 is a schematic illustration of an exemplary system.

Fig. 2 is a flow chart illustrating an exemplary method for managing a set of network resource servers according to this disclosure.

Fig. 3 is a block diagram illustrating an exemplary resource management server device according to this disclosure.

Fig. 4 is a signaling diagram according to this disclosure.

Fig. 5 is a performance graph illustrating the performance of the disclosure over the existing load balancing technique.

DETAILED DESCRIPTION OF THE INVENTION

As mentioned in the background section, existing approaches based on load balancing can provide dependability and reliability of the resources, either by the mere fact that multiple servers exist and the failing of some of the resources do not cause a complete blackout, or by adding additional health-check features that can assess the availability of the network resources by querying the objects. Health-check features can be either implemented at the network level exclusively, for example by assessing that an IP address of the resource server is responding to messages sent by the domain name server or at application level if the domain name server has a piece of software that the resource server can answer to when requested by those means.

The present disclosure is particularly advantageous for the type of network resource servers where health-check features are disabled for situations where it is not desired that the resource management server device interacts with the network resource server by any means (e.g. for cyber-security reasons) or if communications are not permitted in the network between the resource management server device and the network resource server (e.g. in dedicated critical infrastructures, such as communication systems for railway or air transportation).

The disclosed method is not a load-balancing method. The disclosed method relates to managing network resource servers using a passive analysis of their state, and serving requester device according to a reliability, availability, and maintainability criterion.

The present disclosure enables an automatic decision on priority and/or selection of a subset of the known objects at the resource management server device in order to optimize the likelihood of success of the communication between the requester device and the one or more network resource servers. The present disclosure provides overlaying applications with an improved dependable and reliable network resource management service.

The present disclosure proposes to use the resource management server device to collect information from the resource access requests sent by one or more requester devices and the one or more requester devices themselves in order to assess previous decisions of priority and/or selection of the objects contained in previous resource access responses. The inventors have discovered that resource access requests identified by a requester device exhibit a pattern. The pattern can be derived based on identification, resource representation, timing, time interval between resource access requests, content of the resource access request that varies whenever failures at any level occur in the system, and correlations thereof.

In other words, the present disclosure provides a method for managing network resource servers based on incorporating intelligence at the resource management server device. The resource management server device disclosed herein is able to derive a pattern of the resource access requests and the requester devices during normal operation when network resource servers are available in the network, without any interaction or communication with network resource servers. The status of the network resource servers is inferred passively at the resource management server based on a derived pattern of the resource access requests and the requester devices. For example, when a network resource server fails in the network, the resource management server device disclosed herein is able to identify a defect network resource server based on the timing pattern of the consecutive request from the same requester device towards the same resource representation or of a consecutive request from other requesters towards the same resource representation (e.g. correlated requesters or within the same time window). The change in the timing pattern with respect to the baseline behavior is used to rearrange the previously prioritized and/or selected resource identifiers to be given in the resource access response to the new incoming resource access request, either from the same or other requester devices.

Aspects of the present disclosure will be described more fully hereinafter with reference to the accompanying drawings. The methods, apparatuses disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a," "an" and "the" are intended to include the plural forms as well, unless the context clearly indicates otherwise.

The present disclosure relates to a method for managing/monitoring a set of network resource servers of a system. The method is performed at a resource management server device. The system comprises a requester device, the resource management server device, and a plurality of network resource servers. The method comprises receiving a resource access request from the requester device. The resource access request may be defined as request to access one or more of the network resource servers in the set. For example, resource access request may comprise a naming service request (e.g. a DNS request) and/or a network host configuration request (e.g. DHCP request). The resource access request may comprise an identifier indicative of the requester device, a resource representation (e.g. a domain name) that the requester device wants to access, and one or more additional headers or fields.

The method comprises deriving a reliability, availability and maintainability, RAM, criterion. Deriving the RAM criterion comprises analyzing a characteristic of one or more previous resource access requests targeting a resource representation related to one or more of network resource servers and received at the resource management server device. A resource access request is received and processed at the resource management server device. The resource access request is directed to, or targets or queries a resource representation related to (or indicative of) one or more network resource servers. The resource representation may be defined as a representation, denomination, naming, or designation indicative of a set of network resource servers, such as domain name. The resource representation may serve as a representation that groups or categorizes network resource servers, and supports in the communication between the requester device and the network resource servers.

The step of deriving the RAM criterion is performed in response to receiving a resource access request. The step of deriving the RAM criterion with no communication direct or indirect with any of the network resource servers of the set. In one or more exemplary methods, deriving a RAM criterion is performed without communicating with any of the network resource servers in the set of network resource servers. The analysis may take into account one or more previous resource access requests targeting a resource representation (e.g. a domain name) related to one or more of network resource servers and received at the resource management server device from the same requester device, or from any requester device from which a resource access request has been received.

For example, the RAM criterion is inferred by the resource management server device based on the characteristic exhibited in the one or more previous resource access requests targeting a resource representation related to one or more of the network resource servers and received at the resource management server device. The characteristic may be defined as a parameter characterizing the behavior, such as a pattern, which is derivable or inferable based on the one or more previous resource access requests targeting a resource representation related to one or more of the network resource servers and received at the resource management server device. The characteristic is configured to vary sufficiently so as to be detectable by the resource management server device when the network resource server fails or behaves abnormally, or is brought down intentionally (e.g. for maintenance or human error). For example, the characteristic may be timing between two consecutive resource access requests from the same requester device for the same resource representation, such as domain name. The RAM criterion may for example be defined as determining whether the latest previous resource access request targeting a resource representation related to one of the network resource server exhibits a timing characteristic that varies from the behavior derived from the earlier previous resource access request (e.g. by comparison with respect to a characteristic threshold derived from the earlier previous resource access requests). The RAM criterion is configured to support the resource management server device in determining which network resource server in the set functions as expected, or is likely to function as expected, (or conversely, does not function as expected, or is likely to not function as expected).

The method may comprise determining a performance metric for each of the network resource servers in the set or a subset of network resource servers based on the one or more previous resource access requests targeting a resource representation related to each of the network resource servers. In other words, the method may comprise determining a performance metric for each of the network resource servers in the set or a subset of network resource servers based on the one or more previous resource access responses comprising a resource identifier identifying each or a subset of the network resource servers. For example, the resource management server is configured to determine a performance metric for each of the network resource servers or a subset in the set based on a feature characterizing an inferred state of each of the network resource servers identified in the one or more previous resource access responses. The performance metric may be derived based on the reception at the resource management server of previous resource access request targeting a resource representation related to a network resource server and which has been responded to with a previous resource access response comprising a resource identifier of the network resource server. For example, the performance metric of network resource server NRS1 may be derived at the resource management server based on timing between each two consecutive resource access requests amongst the previous resource access requests targeting a resource representation related to NRS1 from a requester device, which have been responded to with resource access response comprising a resource identifier of NRS1. The determination may be performed using previous resource access requests and responses between the same requester device and the resource management server, or between multiple requester devices and the resource management server, as long as the requests/responses relate to the same resource representation.

The method comprises selecting or prioritizing, amongst the set of network resource servers, one or more network resource servers which have the performance metric satisfying the RAM criterion. For example, the resource management server is configured to select the one or more network resource servers in accordance with whether or not their performance metric satisfies the RAM requirements captured by the RAM criterion. In other words, the resource management server is configured to select the one or more network resource servers based on whether or not the network resource servers function as expected, or are likely to function as expected based on an analysis of their performance metric. In one or more exemplary methods, the RAM criterion is configured to increase a likelihood that the requester device is able to establish a communication link with the network resource server corresponding to the targeted resource representation, and optionally with a valid application data exchange with the network resource server. In other words, the RAM criterion may be configured to increase (or at least to provide) a likelihood that the requester device is able to communicate properly with the network resource server to obtain a service as expected. The RAM criterion aims at supporting a prioritization and/or selection of a subset of network resource servers, which can maximize the likelihood that the requester device, after receiving the resource access response, is able to establish a successful communication with the network resource server, such as at the application level of the network resource server, such as obtaining at the requester device a valid and functional service. The present disclosure provides a resource management server device that is able to mitigate failures that may occur from the physical layer up to the application layer and even potentially resulting in a subsequent failure of the communication at the application level while the network layer does not detect any failure. The present disclosure provides a resource management server device that is able to handle situation where maintenance is performed rendering one or more network resource servers unavailable.

In one or more exemplary methods, analyzing a characteristic of the previous resource access requests targeting the resource representation related to one or more of network resource servers comprises deriving a pattern based on the characteristics of the previous resource access requests targeting the resource representation related to each of the network resource servers in the set. Deriving a pattern based on the characteristics may comprise deriving a pattern of failure, and/or a pattern of maintenance. Deriving a pattern of failure and/or a pattern of maintenance allows more robust decisions to mitigate such misbehaviors of the system (such as by predicting, comparing and/or categorizing misbehaviors).

Prioritizing and/or selecting, amongst the set of network resource servers, the one or more network resource servers which satisfies/satisfy the RAM criterion may comprise identifying the one or more network resource servers for which the characteristic of their previous resource access request have substantially followed the derived pattern, such as with least deviation, such as within a percentage margin, or such as within a standard deviation. Analyzing a characteristic of the previous resource access requests may comprise analyzing a characteristic of each of the previous resource access requests targeting the resource representation related to each of the network resource server. Each of the previous resource access requests may comprise each of the resource access requests that happened before the present resource access requests, or each of the N resource access requests that happened before the present resource access requests, where N may be configured at the resource management server device.

This provides the advantage of being less intrusive and therefore suitable for critical infrastructures, such as secure network resource services in dedicated communication systems for transportation, medical, or energy infrastructures.

The method comprises obtaining a resource identifier for each of the selected one or more network resource servers; and transmitting a resource access response to the requester device, wherein the resource access response comprises the obtained resource identifier. The term "resource identifier" as used herein refers to an identifier assigned to each resource in a network. For example, a resource identifier may be an identifier assigned to each network resource server in the disclosed system. For example, a resource identifier may comprise an Internet Protocol, IP, address, a proprietary identifier, and/or an arbitrary identifier.

The present disclosure advantageously provides a resource management server device that is able to passively analyze information about resource access requests and requester devices in order to select a subset of the network resource servers that lead to a higher (or highest possible) successful communication rate between the requester device and the network resource server identified in the request access response.

In one or more exemplary methods, the resource management server device comprises a resource information server device. The resource information server device may for example be configured to translate requested resource representation (such as resource names) to resource identifiers (such as IP addresses), in communication networks. The resource information server device may comprise a naming server device (such as a domain name server, DNS) and/or a network host configuration server device (such as a dynamic host control protocol, DHCP, server). For example, a naming server device is configured to store a relation between resource representations, i.e. domain names, and resource identifiers, such as IP addresses. The naming server device is configured to receive resource access requests from a requester device and respond with one or more resource identifier related to the domain name included in the resource access request. In IP-based networks, e.g. Internet, private fixed networks, domain names are widely used to relate to resource identifiers that are IP address objects of the network resource servers connected to that network. In IP networks, the domain names can be related to a single resource identifier or to multiple resource identifiers and when a resource access request is received at the resource management server, the resource management server answers with one or more known resource identifiers (or optionally all known resource identifiers). The resource management server may comprise a network host configuration server device (such as a dynamic host control protocol, DHCP, server). A network host configuration server device is configured to dynamically distribute network configuration parameters, such as IP addresses, for interfaces and services available at a network resource server based on a resource access request received from the requester device. A router, a computing device with network capabilities, or a residential gateway can be enabled to act as a resource management server.

In one or more exemplary methods, the characteristic comprises time, a time interval, a content of the resource access request, a sender of the resource access request, and/or a resource representation. The content of the resource access request may comprise a sender identifier, a resource representation indicative of the requested network resource server, a requested service, and/or additional headers. The sender of the resource access request may be identified using a sender identifier, such as an address identifier, such as a network address and/or a hardware address.

The disclosed method aims primarily at maximizing the reliability, availability, and maintainability of the overlaying applications by passively analyzing patterns of requester devices and corresponding resource access requests.

In one or more exemplary methods, deriving a pattern comprises evaluating a timing aspect of the previous resource access requests for each of the network resource servers in the set. For example, deriving a pattern may comprise calculating a time interval between any two consecutive previous resource access requests targeting a resource representation related to the same network resource server, and deriving a time pattern representing a characterizing timing behavior of resource access requests targeting a resource representation related to a specific network resource server when operational (i.e. without failure) or when failed (i.e. malfunctioning or due to or human error) or intended maintenance. For example, deriving the pattern may comprise processing the characteristics based on logic, statistical behavior of the resource access requests, and/or machine-learning technique applied to characteristics of the resource access requests. The logic may comprise rules including Boolean operators. The machine-learning technique may comprise Markov models, neural networks, Bayesian networks, unattended learning, k-means clustering, and/or Support Vector Machines.

In one or more exemplary methods, the RAM criterion is configured to maximize a performance criterion, the performance criterion comprising a reliability criterion, an availability criterion, a dependability criterion, and/or a maintainability criterion. Reliability refers to the ability of the system to perform a specific function or provide a service as expected. Availability refers to the ability of a system to keep serving a request. Maintainability is determined by the ease with which the system can be repaired or maintained. A reliable system may not necessarily be an available system, and vice versa. An available system may not necessarily be a maintainable system, and vice versa. A reliable system may not necessarily be a maintainable system, and vice versa. However, the three properties may be correlated. The present disclosure provides a resource management server that passively monitors the network resource servers, so as to provide to a requester device a resource identifier of a network resource server that is optimal in terms of RAM.

In one or more exemplary methods, the method comprises assigning a RAM value to a network resource server (each of them in the set or subset thereof) based on the determined performance metric, wherein the RAM value is indicative of the likelihood that the requester device is able to establish a communication link and application level data exchange with the network resource server. For example, the resource management server device may be configured to correlate the performance metric to the RAM value and to select a network resource server based on a determination of the RAM value fulfilling a RAM criterion. In one or more exemplary methods, the method comprises arranging one or more network resource servers according to the assigned RAM value.

In one or more exemplary methods, assigning a RAM value to a network resource server (each of them in the set or subset thereof) may be performed by identifying a correlation between one or more network resource servers, and deriving a RAM value for a first network resource server based on a RAM value of a second network resource server. The correlation may be derived from a collocation of the first and the second network server. For example, when a building disaster occurs to a building that hosts two or more network resource servers, the RAM value assigned to the first network resource server in the building may be applied to any other network resource server in that building.

In one or more exemplary methods, the method comprises storing the derived pattern, the performance metric and/or the RAM value for each network resource server, such as in the memory module of the resource management server device.

There is also disclosed herein a resource management server device comprising an interface module; a processing module; and a memory module. The resource management server device is configured to perform the method disclosed herein.

This disclosure also relates to a non-transitory computer readable storage medium comprising a computer program, comprising computer readable code which, when run on a processing module of an apparatus, causes the apparatus to perform any of the methods steps disclosed herein.

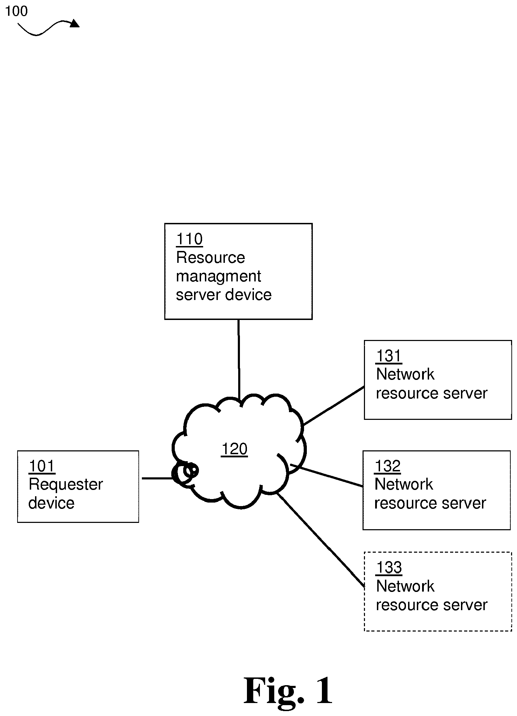

Fig. 1 illustrates an exemplary system according to the present disclosure. The system 100 comprises a requester device 101, a resource management server device 110, and network resource servers 131, 132, 133. The requester device 101, the resource management server device 110, and the network resource servers 131, 132, 133 may be connected over a communication network 120, e.g. the Internet, public IP-based network or a private IP-based network. For example, the requester device 101 is able to communicate with the resource management server device 110 and the network resource servers 131, 132, 133 via the communication network 120. The direct communication between the resource management server device 110 and the network resource servers 131, 132, 133 may be either blocked or controlled either by the communication network 100 or by any other means.

The resource management device 110 may be part of a single device, or part of a cluster of devices.

The requester device 101 is configured to send resource access requests to the resource management server device 110 for accessing network resource servers 131, 132, 133, such as for obtaining resource identifiers (e.g. network objects or parameters) enabling the requester device 101 to access network resource servers 131, 132, 133 (such as for domain name translations or DHCP configurations). The requester device 101 only has for example the domain name of the network resource servers 131, 132, 133, but in order to access the network resources made available by those network resource servers 131, 132, 133, the requester device 101 has to be able to obtain information on which resource identifier (e.g. IP addresses) identifying the network resource servers 131, 132, 133 are to be used in order to access network resource servers 131, 132, 133 and the overlaying application stored thereon. In this example, in order to get the resource identifiers, the requester device 101 requests the resource management server device 110 acting as a domain name server to provide the resource identifiers based on the domain name provided in the resource access request sent by the requester device 101. The resource management server device 110 maintains a list that relates a domain name and the resource identifiers that relate to the network resource servers 131, 132, 133. The network resource servers 131, 132, 133 have each a unique resource identifier that identifies each network resource servers 131, 132, 133, but network resource servers 131, 132, 133 may share the same domain name given that they provide the same overlaying application in an agnostic way from the perspective of the requester device 101. The resource management server device 110 is configured to elaborate a resource access response for a domain name requested in the resource access request by including a subsets of the resource identifiers that identify the network resource servers 131, 132, 133 corresponding to the domain name requested. The resource management server device 110 may process such resource access response based on its internal architecture. The requester device 101 is bound to only be able to access the network resource servers 131, 132, 133 that corresponds the resource identifiers provided in the resource access response. This provides an opportunity for the resource management server device to select the network resource servers 131, 132, 133 and the corresponding identifiers that increase reliability, availability and maintainability of the system based on a passive analysis of the characteristics of the previous resource access requests and of the performance metric of each of network resource servers 131, 132, 133.

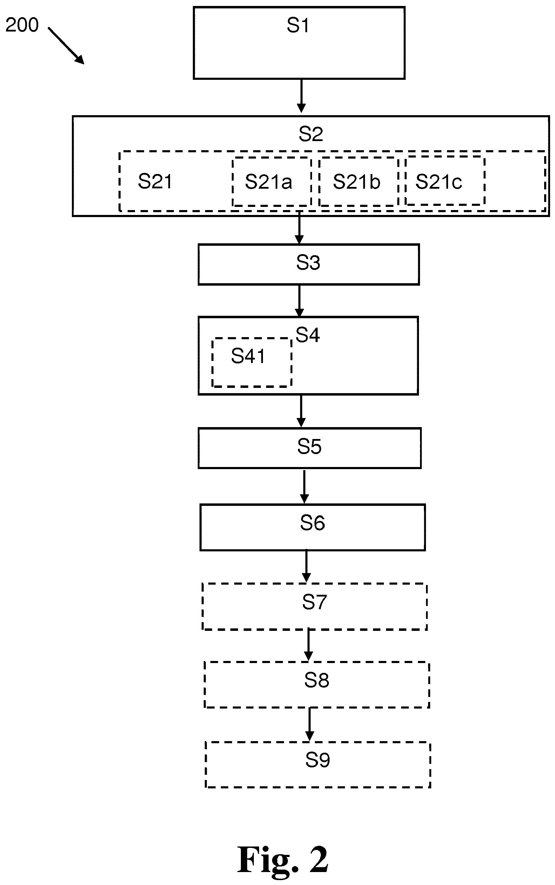

Fig. 2 shows a flow chart illustrating an exemplary method 200 for managing a set of network resource servers of a system according to this disclosure. The method 200 is performed at a resource management server device, such as device 110 of Fig. 1. The method 200 can also be considered a method for monitoring a set of network resource servers, such as passively monitoring the network resource servers so as to be able to better serve a requester device. The system comprising a requester device, the resource management server device, and a plurality of network resource servers. The method 200 comprises receiving S1 a resource access request from the requester device.

The method 200 comprises deriving S2 a reliability, availability and maintainability, RAM, criterion. Deriving S2 the RAM criterion comprises analyzing S21 a characteristic of one or more previous resource access requests targeting a resource representation related to one or more of network resource servers. The step of deriving S1 the RAM criterion is performed with no communication direct or indirect with any of the network resource servers of the set. In other words, for example, deriving S1 the RAM criterion can be seen as inferring the RAM criterion based on a characteristic exhibited in the one or more previous resource access requests targeting the resource representation related to one or more of the network resource servers from the same requester device or from a plurality of requester devices. In one or more exemplary methods, the characteristic comprises time, a time interval, a content of the resource access request, a sender of the resource access request and/or a resource representation. Optionally, the characteristic may comprise system preconfigured parameters, system architecture, sequence of requests/requesters/responses, correlation factors among senders. The content of the resource access request may comprises a sender identifier, a requested network resource server, a requested service, and/or additional headers. The sender of the resource access request may be identified using a sender identifier, such as an address identifier, such as a network address and/or a hardware address. For example, applying the RAM criterion comprises determining whether the latest previous resource access request targeting the resource representation related to one of the network resource server exhibits a timing characteristic that varies from the behavior derived from the earlier previous resource access request targeting the same resource representation (e.g. by comparison with respect to a characteristic threshold derived from the earlier previous resource access requests targeting the same resource representation).

In one or more exemplary methods, analyzing S21 a characteristic of the previous resource access requests targeting a resource representation related to one or more of network resource servers comprises deriving S21a a pattern based on the characteristics of the previous resource access requests targeting the resource representation related to each of or subset of the network resource servers in the set and/or responses identifying each of or a subset of the network resource servers. Selecting S4, amongst the set of network resource servers, the one or more network resource servers which satisfy the RAM criterion may comprise identifying S41 the one or more network resource servers for which the characteristic of their previous resource access requests and/or responses have substantially followed the derived pattern. Analyzing S21 a characteristic of the previous resource access requests may comprise analyzing a characteristic of each of the previous resource access requests targeting the resource representation and/or related responses. Each of the previous resource access requests may comprise each of the resource access requests that happened before the present resource access requests or each of the N resource access requests that happened before the present resource access requests, where N may be configured at the resource management server device. This is a passive analysis of the previous resource access requests. No communication with the network resource servers is needed to perform such an analysis, which results in a resource management that is compatible with critical infrastructures.

The method 200 may comprise determining S3 a performance metric for each of the network resource servers in the set based on the one or more previous resource access requests targeting a resource representation related to each of the network resource servers. For example, the step of determining S3 comprises determining a performance metric for each of the network resource servers in the set based on a feature characterizing an inferred state of each of the network resource servers. The feature is derived or extracted from the one or more previous resource access requests targeting the resource representation related to each of the network resource servers and/or the related responses. For example, the step of determining S3 comprises computing the performance metric based on the reception at the resource management server of previous resource access request targeting the resource representation related to each of the network resource servers, such as based on timing between each two consecutive resource access request of the previous resource access requests targeting a resource representation related to the same network resource server from a requester device.

The method 200 comprises selecting S4, amongst the set of network resource servers, one or more network resource servers which have a performance metric satisfying the RAM criterion. In other word, selecting S4, amongst the set of network resource servers, one or more network resource servers comprises selecting one or more network resource servers that present a performance metric that satisfies the RAM criterion. For example, selecting S4 comprises selecting the one or more network resource servers in accordance with whether or not their performance metric satisfies the RAM requirements captured by the RAM criterion. In other words, selecting S4 comprises selecting the one or more network resource servers in accordance with whether or not the network resource servers function as expected, or are likely to function as expected based on an analysis of their performance metric. In one or more exemplary methods, the RAM criterion is configured to increase a likelihood that the requester device is able to establish a communication link with the network resource server corresponding to the targeted resource representation.

The method 200 comprises obtaining S5 a resource identifier for each of the selected one or more network resource servers, such as retrieving the resource identifier from the memory unit module of the resource management server device.

The method 200 comprises transmitting S6 a resource access response to the requester device, wherein the resource access response comprises the obtained resource identifier.

It is an advantage of the present disclosure that a passive analysis performed at the resource management server enables a prioritization and/or selection of network resource servers that lead to a higher (or highest possible) successful communication rate or a higher application level data exchange rate between the requester device and the network resource server identified in the request access response, without requiring any active communication between the network resource server and the resource management server.

In one or more exemplary methods, deriving S21a a pattern comprises evaluating S21b a timing aspect of the previous resource access requests for each of the network resource servers in the set. For example, deriving S21a a pattern may comprise calculating a time interval between any two consecutive previous resource access requests targeting the same resource representation and previous resource access responses identifying the same network resource server, and deriving a time pattern representing a characterizing timing behavior of resource access requests targeting the resource representation related to a specific network resource server when operational (i.e. without failure) or when failed (i.e. malfunctioning or under maintenance). Additionally or alternatively, deriving S21a a pattern comprises may comprises identifying underlying correlations between requester devices when requesting access to the same resource representation.

In one or more exemplary methods, deriving S21a the pattern may comprise processing S21c the characteristics based on logic, statistical behavior of the resource access requests, and/or machine-learning technique applied to characteristics of the resource access requests.

In one or more exemplary methods, the method comprises assigning S7 a RAM value to a network resource server based on the determined performance metric, wherein the RAM value is indicative of the likelihood that the requester device is able to establish a communication link and/or a valid and functional application level data exchange with the network resource server. For example, the resource management server device may be configured to correlate the performance metric to the RAM value and to select a network resource server based on a determination of the RAM value fulfilling a RAM criterion. In one or more exemplary methods, the method comprises arranging S8 one or more network resource servers according to the assigned RAM value.

In one or more exemplary methods, the method comprises storing S9 the derived pattern, the performance metric and/or the RAM value for each network resource server. For example, storing S9 comprises storing the derived pattern, the performance metric and/or the RAM value for each network resource server in a memory module of the resource management server.

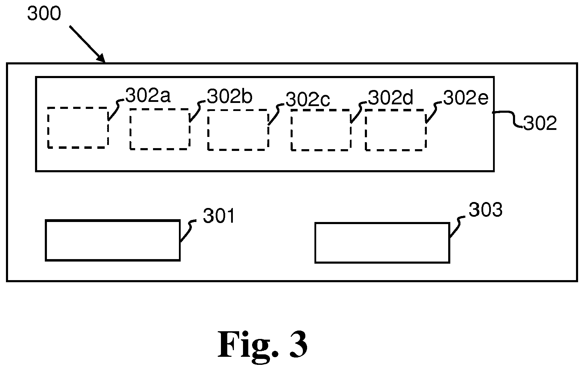

Fig. 3 shows a block diagram illustrating an exemplary resource management server device 300 configured, according to this disclosure, to manage a set of network resource server. The resource management server device 300 is for example a computing apparatus acting as a server and configured to support a requester device in contacting a network resource server. One must appreciate that capability to manage resource access requests as disclosed herein could be built in almost any server device having a processing capability, network interfaces and some memory.

The resource management server device 300 comprises a memory module 301 and a processing module 302. The memory module 301 is for example a data storage medium such as a collocated data storage medium, a remote data storage medium, removable and non-removable storage medium including, but not limited to, Read Only Memory, ROM, Random Access Memory, RAM, and any other variants. The memory module 301 may also comprise persistent storage, which, for example, can be any single one or combination of magnetic memory, optical memory, solid state memory or even remotely mounted memory. The processing module 302 is provided using any combination of one or more of a suitable central processing unit, CPU, multiprocessor, microcontroller, digital signal processor DSP, application specific integrated circuit, ASIC, field programmable gate arrays, FPGA, graphical processing unit, GPU etc., capable of executing software instructions or computer readable code stored in a computer program, e.g. in the form of a storage medium. Thus, the processing unit 302 is thereby arranged to execute methods for managing or monitoring a set of network resource servers as disclosed herein.

The resource management server device 300 comprises an interface 303. The interface module 303 comprises for example an interface operatively connected to a wireless communication system (such as for short-range communication system, local area network, cellular communication system) and/or a wired communication interface (such as fiber-based communications, electrical wiring, coaxial and/or serial connections). The processing module 302 controls the general operation of the resource management server 300 e.g. by receiving data and controlling signals to the interface module 303 and the memory module 301, by sending data via interface module 303, and by retrieving data and instructions from the memory module 301. Other components, as well as the related functionality, of the apparatus 300 are omitted in order not to obscure the concepts presented herein.

The resource management server device 300 or the processing module 302 is configured to receive a resource access request from the requester device, e.g. via the interface module 303. The resource access request may be defined as request to access one of the network resource servers in the set. For example, resource access request may comprise a naming service request (e.g. a DNS request) and/or a network host configuration request (e.g. DHCP request). The resource access request may comprise an identifier indicative of the requester device, a representation (e.g. a domain name) of the network resource server that the requester device wants to access, and one or more additional headers or fields.

The resource management server device 300 or the processing module 302 is configured to derive a reliability availability and maintainability, RAM, criterion. The resource management server device 300 or the processing module 302 is configured to derive the RAM criterion by analyzing a characteristic of one or more previous resource access requests targeting a resource representation related to one or more of network resource servers. The resource management server device 300 or the processing module 302 is configured to derive the RAM criterion with no communication direct or indirect with any of the network resource servers of the set. In other words, the resource management server device 300 or the processing module 302 is configured to infer the RAM criterion based on the characteristic exhibited in the one or more previous resource access requests targeting the resource representation and/or the related previous resource access responses identifying one or more network resource servers in the set of the network resource servers. The characteristic may be defined as a parameter characterizing the behavior, such as a pattern, which is derivable or inferable based on the one or more previous resource access requests targeting the resource representation and/or the related previous resource access responses identifying one or more network resource servers. The resource management server device 300 or the processing module 302 is configured to analyze the characteristic that vary sufficiently when the network resource server fails or behaves abnormally due to intentional maintenance. For example, the characteristic may be timing between two consecutive resource access requests from the same requester device for the same resource representation in a very short time window.

The resource management server device 300 or the processing module 302 may be configured to determine a performance metric for each of the network resource servers in the set based on the one or more previous resource access requests targeting the resource representation and/or the related previous resource access responses identifying one or more network resource servers. For example, the resource management server is configured to determine a performance metric for each of the network resource servers in the set based on a feature characterizing an inferred state of each of the network resource servers included in the one or more previous resource access requests targeting the resource representation and/or the related previous resource access responses identifying one or more network resource servers. The performance metric may be derived based on the reception at the resource management server of previous resource access request targeting the resource representation and/or the transmission of related previous resource access responses identifying one or more network resource servers related to the resource representation. For example, the performance metric of network resource server NRS1 may be derived at the resource management server based on timing between each two immediately consecutive resource access requests of the previous resource access requests targeting the resource representation indicative NRS1 from a requester device where a previous resource access response to the requester device comprised the resource identifier of NRS1.

The resource management server device 300 or the processing module 302 is configured to prioritize and/or select, amongst the set of network resource servers, one or more network resource servers which have the performance metric satisfying the RAM criterion. For example, the resource management server is configured to select the one or more network resource servers in accordance with whether or not their performance metric satisfies the RAM requirements captured by the RAM criterion. In other words, the resource management server is configured to select the one or more network resource servers based on whether or not the network resource servers function as expected, or are likely to function as expected based on an analysis of their performance metric. In one or more exemplary methods, the RAM criterion is configured to increase a likelihood that the requester device is able to establish a communication link and an application level data exchange with the network resource server corresponding to the targeted resource representation. In other words, the RAM criterion may be configured to increase (or at least to provide) a likelihood that the requester device is able to communicate properly with the network resource server to obtain a service as expected. The RAM criterion aims at supporting a prioritization and/or selection of a subset of network resource servers, which can maximize the likelihood that the requester device, after receiving the resource access response, is able to establish a successful communication with the network resource server, such as at the application level of the network resource server.

The present disclosure provides a resource management server device 300 that is able to mitigate abnormal behavior due to a failures or maintenance across the OSI layers. For example, the disclosed resource management server device 300 is able to mitigate a failure of the communication at the application level while the network layer does not detect any failure.

In one or more exemplary devices, the resource management server device 300 or the processing module 302 is configured to analyze a characteristic of the previous resource access requests targeting the resource representation indicative one or more of network resource servers by deriving a pattern based on the characteristics of the previous resource access requests targeting the resource representation. The resource management server device 300 or the processing module 302 may be configured to prioritize or select, amongst the set of network resource servers, the one or more network resource servers which satisfy the RAM criterion by identifying the one or more network resource servers for which the characteristic of the related previous resource access request/responses have substantially followed the derived pattern, such as with least deviation, such as within a percentage margin, or such as within a standard deviation. The resource management server device 300 or the processing module 302 may be configured to analyze a characteristic of each of the previous resource access requests targeting the resource representation. Each of the previous resource access requests may comprise each of the resource access requests that happened before the present resource access requests or each of the N resource access requests that happened before the present resource access requests, where N may be configured at the resource management server device 300.

The resource management server device 300 or the processing module 302 is configured to obtain a resource identifier for each of the selected one or more network resource servers, such as to retrieve from the memory module 301. For example, resource management server device 300 or the processing module 302 retrieves the resource identifier (e.g. IP addresses) of the selected one or more network resource servers.

The resource management server device 300 or the processing module 302 is configured to transmit via the interface module 303 a resource access response to the requester device, wherein the resource access response comprises the obtained resource identifier.

The present disclosure advantageously provides a resource management server device 300 that passively analyzes information about resource access requests/responses and requester devices in order to identify and select a subset of the network resource servers that lead to a higher (or highest possible) successful communication rate and application level data exchange rate between the requester device and the network resource server identified in the request access response.

In one or more exemplary device, the resource management server device 300 comprises a resource information server device. The resource information server device may for example be configured to translate requested resource item (such as resource names) to resource identifiers (such as network identifiers, such as IP addresses), in communication networks. The resource information server device may comprise a naming server device (such as a domain name server, DNS) and/or a network host configuration server device (such as a dynamic host control protocol, DHCP, server). For example, a naming server device is configured to store a relation between domain names and resource identifiers, such as IP addresses. A network host configuration server device is configured to dynamically distribute network configuration parameters, such as IP addresses, for interfaces and services available at a network resource server based on a resource access request received from the requester device. A router, a computing device, or a residential gateway can be enabled to act as a resource management server device 300.

In one or more exemplary devices, the resource management server device 300 or the processing module 302 may be configured to derive a pattern by evaluating a timing aspect of the previous resource access requests for each of the network resource servers in the set. For example, the resource management server device 300 or the processing module 302 is configured to derive a pattern by calculating a time interval between any two consecutive previous resource access requests targeting a resource representation related to the same network resource server, and deriving a time pattern representing a characterizing timing behavior of resource access requests targeting a resource representation related to a specific network resource server when operational (i.e. without failure) or when failed (i.e. malfunctioning). For example, the resource management server device 300 or the processing module 302 is configured to derive the pattern by processing the characteristics based on logic, statistical behavior of the resource access requests, and/or machine-learning technique applied to characteristics of the resource access requests.

In an illustrative example where the disclosed technique is applicable, it is assumed that there is a single requester device and two network resource servers in the system. Due to the nature of the system, the requester device requests a name translation to the resource management server device 300 approximately every 5 minutes. In normal operation mode, when no failures exist at any level, the resource management server device 300 is capable of deriving that the requester device exhibits a pattern of resource access requests with an interval of 5 minutes. As long as the pattern holds, the resource management server device 300 may be configured to include one of the resource identifiers of the two network resource servers alternately. As long as no failure occurs at the network resource servers, the pattern holds and any of the respective resource identifiers respectively leads to a successful communication between the requester device and the application module of the corresponding network resource servers. When a failure happens at any level, the resource identifiers does not lead to a successful communication with the network resource servers. Therefore, the requester device sends a new resource access request to the resource management server device 300. The resource management server device 300, by holding the RAM criterion and the derived pattern of previous resource access requests for this requester device is capable of identifying that the current resource request exhibits a characteristic that does not satisfy the RAM criterion, i.e. that the timing characteristic shows a shorter interval. The resource management server device 300 is thus capable of realizing that the resource identifier provided in the previous request did not lead to a successful communications. Thus, the resource management server device 300 is configured to select other resource identifiers of network resource servers which exhibit the satisfying performance. After a failure has occurred, the resource management server device 300 has detected and removed the resource identifier that lead to failing communication, resource management server device 300 is configured to according to a back-off timer attempt to include the failing resource identifier in a resource access response as if it would be leading to normal communications. If no failure is further detected, the resource management server resumes that method disclosed herein.

In the example above, only two network resource servers have been illustrated and only one resource identifier has been used to respond by. It is envisaged that the disclosed method is applicable to a plurality of network resource servers as shown in Fig. 1, and several resource identifiers to build the pattern. The resource access response may include a plurality of resource identifiers. The maximum number of resource identifier used in the resource access response may be automatically set by the resource management server device based on the subset that lead to the least variation, or may be restricted by the system's architecture itself.

It may be envisaged that the functionalities of resource server management devices are distributed and orchestrated to perform the method disclosed herein.

In one or more exemplary devices, the resource management server device 300 or the processing module 302 may be configured to assign a RAM value to a network resource server based on the determined performance metric, wherein the RAM value is indicative of the likelihood that the requester device is able to establish a communication link or a valid application level exchange with the network resource server. For example, the resource management server device 300 may be configured to correlate the performance metric to the RAM value and to prioritize and/or select a network resource server based on a determination of the RAM value fulfilling a RAM criterion. In one or more exemplary devices, the resource management server device 300 or the processing module 302 may be configured to arrange one or more network resource servers according to the assigned RAM value.

In one or more exemplary methods, the resource management server device 300 or the processing module 302 may be configured to store the derived pattern, the performance metric and/or the RAM value for each network resource server in the memory module 301.

The resource management server device 300 or the processing unit 302 is arranged to execute methods for managing and monitoring a set of network resource servers as disclosed herein. The device 300 or the processing unit 302 may further comprise a number of optional functional modules, such as any of a derive module 302a configured to perform steps S2 and S21, a determiner module 302b configured to perform step S3, and a prioritize and/or select module 302c to perform step S4. The derive module 302a is optionally configured to perform step S21a. The derive module 302a is optionally configured to perform step S21b. The select module 302c is optionally configured to perform step S41. The processing unit 302 may further comprise an assign module 302d configured to perform step S7 and an arrange module 302e configured to perform step S8. The functionality of each functional module 302a-e is disclosed in the context of which the functional modules 302a-e may be used in Fig. 2 and accompanying text. In general terms, each functional module 302a-e may be implemented in hardware or in software. Preferably, one or more or all functional modules 302a-e may be implemented by the processing module 302, possibly in cooperation with functional units 301 and 303. The processing module 302 may thus be arranged to fetch instructions from the memory module 301 as provided by a functional module 302a-e and to execute these instructions, thereby performing any steps as disclosed herein.

The various exemplary embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

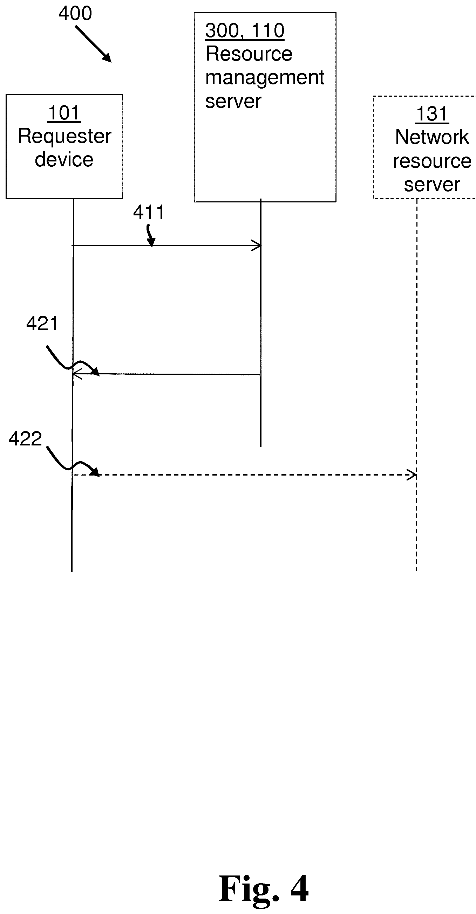

Fig. 4 shows an exemplary signaling diagram 400 illustrating the method disclosed herein involving a requester device 101, a resource management server device 110. The diagram 400 also shows the subsequent communication between the requester device 101 and the network resource server 131 for illustration purposes. The resource management server device 110, 300 receives via the interface 303 a resource access request 411 from the requester device 101. The resource management server 110, 300 processes the resource access request 411 by analyzing its content to identify the requester device 101 and a resource representation targeted in the request 411 (such as a domain name to be accessed). The resource management server 110, 300 identifies the set of network resource corresponding to the resource representation of the request 411. The resource management server 110, 300 derives a RAM criterion by analyzing a characteristic of the one or more previous resource access requests targeting a resource representation related to one or more of network resource servers from the requester device 101 or from any requester device having sent a resource access request to device 110, 300. The resource management server 110, 300 determines a performance metric for each of or a subset of the network resource servers in the set based on the one or more previous resource access requests targeting the resource representation. The derivation of the RAM criterion and the determination of the performance metric may be performed continuously by the resource management server 110, 300. Thus, it may be envisaged that the derivation of the RAM criterion and the determination of the performance is performed periodically, or continuously, and/or possibly prior to receiving the resource access request 411. The resource management server 110, 300 prioritizes and/or selects, amongst the set of network resource servers, one or more network resource servers which have the performance metric satisfying the RAM criterion. The resource management server 110, 300 obtains a resource identifier for each of the selected one or more network resource servers. In this example, the resource management server 110, 300 selects the network resource server 131 and the resource identifier, e.g. IP address thereof. The resource management server 110, 300 transmits a resource access response 421 to the requester device 101, wherein the resource access response 421 comprises the obtained resource identifier. The requester device 101 may then subsequently initiate a communication 422 with the network resource server 131 using the resource identifier. Flow diagram 400 illustrates that the resource management server 110, 300 does not communicate with the network resource server 131 to be able to derive the state of function of the network resource server 131.

In an illustrative example where the present disclosure is applied, it is assumed that the set of network resource servers include 2 network resource servers, and 1 network resource server is to be selected. For the sake of simplicity and illustration, it is also assumed that only 1 failure takes place at a time. The following parameters are denoted:

$\partial$ - Time interval between the present resource access request of requester device 101 and the previous resource access request of requester device 101.

$\partial_n$ - Time interval between the present resource access request of requester device 101 and the previous resource access request of requester device 101 in normal operation.

$\partial_\varepsilon$ - Time interval between the present resource access request of requester device 101 and the previous resource access request of requester device 101 in case of failure.

$B$ - Blacklist

$S = \{s_1; s_2\}$ - Set of network resource servers

$s_p$ - the network resource server that is identified in the previous resource access response to requester device 101.

*MTBF* - Mean time between failures of the network resource servers

*MTTR* - Mean time to repair the network resource servers

Operation of the Method

In normal operation where there is no network resource server that has been detected as faulty, the resource management server device 110, 300 is configured to include in the resource access response the resource identifier of network resource server $s_1$, *if* $\partial = \partial_n$ *AND* $s_p = s_2$; and the blacklist is empty or at least does not include any of $s_2$ and $s_1$.

Upon detection of a diverging behaviour, the resource management server device 110, 300 is configured to add the resource identifier of the network resource server to a blacklist that holds a list of the resource identifiers of the defect network resource servers based on the following condition:

$$if \ \partial = \partial_\varepsilon \ \text{and} \ s_p = s_2,$$

i.e. $s_2$ is the network resource server that is identified in the previous resource access response to requester device 101; and that the time interval between the present resource access request from requester device 101 and the previous resource access request of requester device 101 that was responded to by a resource access response including the resource identifier of $s_2$ is substantially equal to the time interval between the present resource access request of requester device 101 and the previous resource access request of requester device 101 in case of failure of the same network resource server identified in the resource access response.

In case of failure where at least one network resource server has been detected as faulty (i.e. blacklist include a resource identifier), the resource management server device 110, 300 is configured to include in the resource access response the resource identifier of network resource server that is not blacklisted. For example, the resource management server device 110, 300 is configured to include in the resource access response the resource identifier of:

$$s_1, if \ B = s_2$$

($s_2$ is in the blacklist)

$$s_2, if\ B = s_1$$

($s_1$ is in the blacklist) When a network resource server has been detected as faulty and is now functioning properly, the resource management server device 110, 300 is configured to perform a reset. For example, the resource management server device 110, 300 is configured to include in the resource access response the resource identifier of:

$$s_1, if\ \partial = \partial_n\ AND\ B = s_1\ AND\ s_p = s_1$$

($s_1$ is removed from the blacklist)

$$s_2, if\ \partial = \partial_n\ AND\ B = s_2\ AND\ s_p = s_2$$

($s_1$ is removed from the blacklist)

In present example, the availability performance of the disclosed technique and a conventional load balancing technique without a health check feature are assessed and compared.

Availability performance during failure of a conventional load balancing technique is:

$$A_f = \frac{1}{2}$$

Availability performance during failure of the disclosed technique is:

$$A_f = \left(\frac{\partial_\varepsilon}{MTTR}\right) \times \frac{1}{2} + \left(1 - \frac{\partial_\varepsilon}{MTTR}\right) \times 1 = \left(1 - \frac{\partial_\varepsilon}{2 \times MTTR}\right)$$

The disclosed technique provide 50% availability after failure and prior to detection and 100% after detection.

An overall availability performance during failure of a conventional load balancing technique is: $A = \frac{MTBF}{MTBF + MTTR}$

An overall availability performance during failure of the disclosed technique is:

$$A = \frac{MTBF}{MTBF + \partial_\varepsilon}$$

For illustrative purposes, the following is assumed:

$$\partial_n = 300s$$

$$\partial_\varepsilon = 10s$$

$$MTBF = 8760h\ (1\ year)$$

$$MTTR = 8h$$

Availability performance during failure of a conventional load balancing technique has been calculated to be: $A_f$ = 50%

Availability performance during failure of the disclosed technique has been calculated to be: $A_f$ = 99.98%

An overall (e.g. over a longer period) availability performance of a conventional load balancing technique has been calculated to be: $A$ = 99.91% . This availability performance is very critical and unacceptable for a high availability system. A high availability system usually requires at least 99,99% or 99,999% of overall availability performance.

An overall (e.g. over a longer period) availability performance of the disclosed technique has been calculated to be: $A$ = 99.99997%

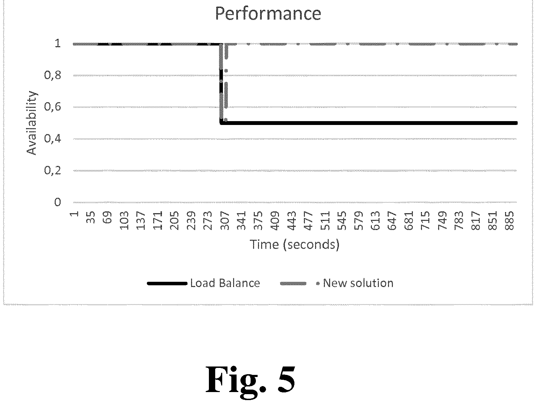

Fig. 5 is a performance diagram comparing a conventional load balancing technique and the disclosed technique (entitled new solution in the diagram) using the following:

- Normal operation between 0 and 300s

- Network resource server failure occur at 300s

- Network resource server remains in failed state until the end of the 900s

The disclosed technique outperforms the conventional load balancing technique in that the disclosed technique provides an improved availability, reliability and maintainability. The disclosed technique allows fast recovery to a high performance after a failure has occurred and while it remains in such state. While the convention load balancing technique performs at best with 50% availability during the failure, the disclosed technique can, after a detection period, identify the failed network resource server, blacklist it and avoid its inclusion in subsequent resource access responses sent to the any of the requester devices. Consequently, the technique, also permits intentional maintenance to be executed with no RAM dependencies since the disclosed technique can adapt to the maintenance as if it would be a failure. This is very advantageous for critical infrastructure that should as minimal as possible downtime.

It shall be appreciated that Figs. 1-4 comprises some modules or operations which are illustrated with a darker border and some modules or operations which are illustrated with a dashed border. The modules or operations which are comprised in a darker border are modules or operations which are comprised in the broadest example embodiment. The modules or operations which are comprised in a dashed border are example embodiments which may be comprised in, or a part of, or are further modules or further operations which may be taken in addition to the modules or operations of the darker border example embodiments. It should be appreciated that operations need not be performed in order. Furthermore, it should be appreciated that not all of the operations need to be performed. The example operations may be performed in any order and in any combination. It should be appreciated that the example operations of Figs. 1 and 4 may be performed simultaneously for any number of components, devices and apparatuses.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

**Claims**

1. A method, performed at a resource management server device, for managing a set of network resource servers of a system, the system comprising a requester device, the resource management server device, and the network resource servers, the method comprising:

   - receiving a resource access request from the requester device;
   - deriving a reliability, availability and maintainability, RAM, criterion, wherein deriving the RAM criterion comprises analyzing a characteristic of one or more previous resource access requests, the one or more previous resource access requests targeting a resource representation related to one or more of the network resource servers, and wherein the one or more previous resource access requests are received at the resource management server device;
   - determining a performance metric for one or more of the network resource servers in the set based on the one or more previous resource access requests targeting the resource representation;
   - selecting, amongst the set of network resource servers, one or more network resource servers which have the performance metric satisfying the RAM criterion;
   - obtaining a resource identifier for each of the selected one or more network resource servers;
   - transmitting a resource access response to the requester device, wherein the resource access response comprises the obtained resource identifier.

2. The method according to claim 1, wherein the resource management server device comprises a resource information server device.

3. The method according to claim 2, wherein the resource information server device comprises a naming server device and/or a network host configuration server device.

4. The method according to any previous claims, wherein the characteristic comprises time, a time interval, a content of the resource access request, a sender of the resource access request, and/or a resource representation.

5. The method according to any previous claims, wherein deriving a RAM criterion is performed without communicating with any of the network resource servers in the set of network resource servers.

6. The method according to any previous claims, wherein analyzing a characteristic of the previous resource access requests targeting the resource representation comprises deriving a pattern based on the characteristics of the previous resource access requests targeting the resource representation; and wherein selecting, amongst the set of network resource servers, the one or more network resource servers which have the performance metric satisfying the RAM criterion comprises identifying the one or more network resource servers for which the characteristic of their previous resource access request have substantially followed the derived pattern.

7. The method according to claim 6, wherein deriving a pattern comprises evaluating a timing aspect of the previous resource access requests for each of the network resource servers in the set.

8. The method according to any of claims 6-7, wherein deriving the pattern comprises processing the characteristics based on logic, statistical behavior of the resource access requests, and/or machine-learning technique applied to characteristics of the resource access requests.

9. The method according to any of the previous claims, wherein the RAM criterion is configured to increase a likelihood that the requester device is able to establish a communication link with the network resource server corresponding to the targeted resource representation.

10. The method according to any of the previous claims, wherein the RAM criterion is configured to maximize a performance criterion, the performance criterion comprising a reliability criterion, an availability criterion, a dependability criterion, and/or a maintainability criterion.

11. The method according to any of the previous claims, the method comprising assigning a RAM value to a network resource server based on the determined performance metric, wherein the RAM value is indicative of the likelihood that the requester device is able to establish a communication link with the network resource server.

**12.** The method according to claim 11, the method comprising arranging one or more network resource servers according to the assigned RAM value.

**13.** The method according to any of claims 6-12, the method comprising storing the derived pattern, the performance metric and/or the RAM value for each network resource server.

**14.** A resource management server device comprising:

- an interface module;
- a processing module; and
- a memory module,

wherein the resource management server device is configured to perform the method as claimed in any of claims 1-13.

**15.** A non-transitory computer readable storage medium comprising a computer program, comprising computer readable code which, when run on a processing module of an apparatus, causes the apparatus to perform the method as claimed in any of 1-13.

100

**110**
Resource
managment
server device

**131**
Network
resource server

**120**

**101**
Requester
device

**132**
Network
resource server

**133**
Network
resource server

# Fig. 1

Fig. 2

300

302a 302b 302c 302d 302e

302

301 303

# Fig. 3

400

300, 110
Resource
management
server

131
Network
resource
server

101
Requester
device

411

421

422

**Fig. 4**

Fig. 5

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/129665 A1 (TOEBES JOHN [US] ET AL) 15 June 2006 (2006-06-15) * abstract; figures 3, 4 * * paragraphs [0051] - [0056] * ----- | 1-15 | INV. H04L29/12 H04L12/24 H04L29/08 |
| A | WO 2011/049500 A1 (ERICSSON TELEFON AB L M [SE]; TOTH GABOR [HU]; WESTBERG LARS [SE]) 28 April 2011 (2011-04-28) * abstract; figures 1, 4b, 5 * * claim 1 * ----- | 1-15 | |

TECHNICAL FIELDS
SEARCHED (IPC)

H04L

The present search report has been drawn up for all claims

| Place of search | Date of completion of the search | Examiner |
|---|---|---|
| Munich | 22 June 2017 | Fantacone, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 1038

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2017

| Patent document cited in search report | Publication date | Patent family member(s) | Publication date |
|---|---|---|---|
| US 2006129665 A1 | 15-06-2006 | NONE | |
| WO 2011049500 A1 | 28-04-2011 | US 2012203864 A1 | 09-08-2012 |
| | | WO 2011049500 A1 | 28-04-2011 |

EPO FORM P0459

For more details about this annex : see Official Journal of the European Patent Office, No. 12/82